# EUROPEAN PATENT SPECIFICATION

(11) **EP 0 244 260 B1**
(45) Date of publication and mention of the grant of the patent: **11.08.1993**
(21) Application number: 87303916.8
(22) Date of filing: 30.04.1987
(51) Int. Cl.: H04N 7/10, H04N 7/18

(54) **Method and system for multiplex transmission of an audio signal and a video signal through a communication cable**
Verfahren und System für Multiplexübertragung eines Audiosignals und eines Videosignals über ein Kommunikationskabel
Procédé et dispositif pour la transmission multiplexée de signaux audio et vidéo par un câble de communication

(30) Priority: 30.04.1986 JP 100185/86; 30.04.1986 JP 100187/86
(43) Date of publication of application: 04.11.1987
(73) Proprietor: SHARP KABUSHIKI KAISHA, Osaka 545 (JP)
(72) Inventor: Iwamura, Soichi, Fuchu-shi Tokyo-to (JP); Murakami, Satoshi, Nagareyama-shi Chiba-ken (JP); Itsumi, Tadashi, Kashiwa-shi Chiba-ken (JP)
(74) Representative: Brown, Kenneth Richard

(56) References cited:
- EP-A- 0 157 460
- GB-A- 1 425 341
- GB-A- 1 524 183
- US-A- 3 492 418
- PROCEEDINGS OF THE IEEE, vol. 58, no. 7, July 1970, pages 1016-1023; R.P. GABRIEL: "Dial a programm - an HF remote selection cable television system"

## Description

The present invention relates to a system and method for audio-video multiplex transmission through a pair of telephone communication cables by multiplexing simultaneous two-way voice signals and, a frequency-modulated carrier of monochrome/colour signal.

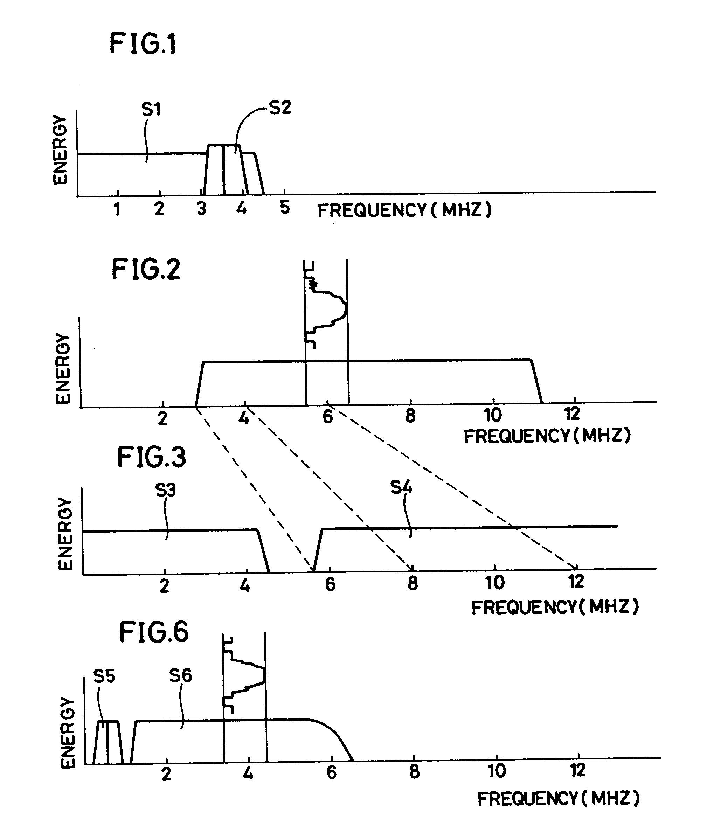

Baseband-transmission of simultaneous two-way voice signals through a pair of telephone communication cables and a video signal with power supply through a co-axial cable, as employed in door-phone cameras and the like, is known. As will be understood from the spectrum distribution of the NTSC (National Television System Committee) signal shown in Fig. 1, a video signal often includes a low frequency spectrum down to a DC component. In this diagram, S1 represents the spectrum of a luminance signal and S2 that of a chrominance subcarrier.

When audio and video signals are directly multiplexed in accordance with the conventional method of transmission, a disadvantage arises as the low-frequency component of the video signal comes to overlap with the audio signals in baseband transmission. In order to prevent such overlapping of the spectra of audio and video signals, a carrier is frequency-modulated by the video signal to avoid the appearance, in its low-frequency range of any video component, and then such modulated video carrier and the voice signals are multiplexed for simultaneous transmission. Fig. 2 graphically shows the spectrum distribution of the a carrier that is directly frequency-modulated by the NTSC signal.

At the demodulator output, as shown in Fig. 3, the 2nd harmonic component S4 of the FM carrier spectrum is superposed on the demodulated video signal S3 and the wide-band useless component S4 can be removed by means of a low-pass filter so that the required video signal S3 alone is obtained.

However, if the carrier frequency of the video signal is set to be low, the lower side of the 2nd harmonic component S4 of the FM carrier overlaps with the upper-side component of the demodulated video signal at the demodulator output and consequently brings about "moire" interference. Since it is necessary to set the carrier frequency as high as 4.5 to 5.5 MHz according to the conventional method of transmission, it follows that the bandwidth necessary for FM carrier transmission becomes so wide as to eventually cause problems in multichannel transmission or the like.

Means for baseband transmission of a video signal with a telephone communication cable is also known. For example, an article in Proceedings of the IEEE, Vol. 58 No. 7, July 1970 by R.P. Gabriel describes a cable T.V. system which includes a facility for two-way transmission.

In the following description the telephone communication cable is not intended to be limited to an inhouse cable (for example, a communication cable composed of a pair of parallel or twisted wires each having a diameter of 0.65 mm and coated with polyvinyl chloride), but also for interphone it includes parallel vinyl lines generally used for AC power supply (composed of a pair of twisted wires (20/0.18 or 30/0.18)). Hereinafter any of the above communication cables will be referred to simply as cable. A problem exists in that such cable is adversely affected by external radio waves, and particularly medium waves (550 - 1350 kHz) may be induced along the cable causing "moire" interference and the like in a reproduced picture at the receiving end. That is, on a television picture, "moire" pattern will appear if any interference wave superposed on the video signal is more that -50 dB, thereby causing deterioration of picture quality. In order to eliminate "normal mode" interference, push-pull transmission with balancers may be preferable, but it is still difficult to completely prevent "common mode" disturbance caused by medium waves at high field-intensity areas. Furthermore, due to the necessity of fixing the cable with staples or threading the cable through an iron pipe and so on it is unavoidable that some effects are actuated because of the environmental conditions of the cable, hence causing multipath reflection of the carrier being transmitted through the cable. Particularly, transmission characteristics on a span over 100 metres show a uniform descending curve at high frequencies with some occasional dips of -6 dB or so at medium frequencies (0.5 to 2 MHz) caused by impedance mismatching at cable terminators. It may be contrived to transmit the video signal by the use of a co-axial cable for the purpose of obtaining a satisfactory reproduced picture. However, when replacing existing equipment for interphone with new door-phone camera equipment, for example, there still remains the disadvantage of the need for additional work to install another co-axial cable separately beside the existing one.

The present invention has been developed in view of the circumstances mentioned above, and its principal aim is to provide an improved method which, in multiplex transmission of audio and video information, is capable of separating the pass-band necessary for the frequency-modulated carrier of the video signal from that necessary for audio signals and also of separating it from the medium wave broadcast band.

Another aim of the invention is to provide an improved method which ensures high quality picture reproduction in multiplex transmission of audio and video signals through cables.

Accordingly, the invention provides in a first aspect an apparatus for transmitting and receiving multiplexed audio-video signals through a pair of parallel wires or twisted pair of wires by multiplexing a baseband audio signal and a video signal, the apparatus comprising a transmitter including,
first separating means for separating an original signal into a luminance signal and a chrominance signal;
first modulating means for modulating a low-frequency carrier with the separated luminance signal;
first converting means for converting the separated chrominance signal to a frequency lower than its original frequency;
multiplexing means for multiplexing the base band audio signals, the frequency-modulated luminance signal, and the frequency-converted chrominance signal by frequency division, and for transmitting the multiplexed signals; and
a receiver including,
second separating means connected to said multiplexing means via said wires, for separating the transmitted signals into a two-way audio signal, a frequency modulated luminance signal, and a down-converted chrominance signal;
demodulating means for demodulating the frequency-modulated luminance signal;
second converting means for converting the down-converted chrominance signal to its original frequency; and
mixing means for mixing the signals to obtain the original video signal,
the transmitter further comprising pre-emphasizing means, connected to said first separating means, for pre-emphasizing the luminance signal prior to modulation thereof, by emphasizing a high-frequency component of the luminance signal; and that the receiver further comprises
limiting means, connected to said second separating means, for removing an amplitude component of the frequency modulated luminance signal; and
suppressing means, connected to said demodulating means, for suppressing the high frequency component of the demodulated luminance signal, subsequent to said luminance signal being demodulated.

In a second aspect the invention provides an apparatus for transmitting and receiving multiplexed audio-video signals between two sets of transmitters/receivers, one transmitter/receiver set at each of a first and second station, by a pair of parallel wires or twisted pair of wires, by multiplexing baseband audio signals and video signals, the baseband audio signals being bidirectional and comprising
first separating means for separating a first original signal into a luminance signal and a first chrominance signal;
first pre-emphasizing means, connected to said first separating means, for pre-emphasizing the first luminance signal by emphasizing a high frequency component thereof;
first modulating means for modulating a first low frequency carrier with the separated first luminance signal;
first converting means for converting the separated chrominance signal to a frequency lower than its original frequency;
first multiplexing means, for multiplexing said first frequency modulated luminance signal and the first frequency converted chrominance signal with baseband audio signals at said first station and for simultaneously transmitting each of the multiplexed signals through a pair of parallel wires or twisted pair of wires in a bidirectional manner;
second separating means for separating a second original signal into a second luminance signal and a second chrominance signal;
second pre-emphasizing means, connected to said second separating means for pre-emphasizing the second luminance signal by emphasizing a high frequency component thereof;
second modulating means for modulating the second luminance signal with a second low frequency carrier, different from said first low frequency carrier;
second converting means for converting the second separated chrominance signal to a frequency lower than its original frequency;
second multiplexing means, for multiplexing the second frequency-modulated luminance signal and the second frequency converted chrominance signal with baseband audio signals at said second station and for simultaneously transmitting each of the multiplexed signals through the pair of parallel wires or twisted pair of wires in a bidirectional manner such that said multiplexed signals at each of said first and second stations both operate at different frequencies;
third and fourth separating means for separating each of the multiplexed signals into audio signals and frequency-modulated video signals at each of said first and second stations respectively;
first and second limiting means, connected to said first and second separating means, respectively, for removing an amplitude component from each of the separated frequency-modulated and frequency converted video signals at each of said first and second stations respectively;
first and second frequency demodulating means, connected to said first and second limiting means, respectively, for frequency demodulating each of the frequency modulated video signals at each of said first and second stations respectively, thereby allowing bidirectional transmission of the audio and video signals;
first and second suppressing means connected to the first and second demodulating means respectively for suppressing the high frequency component of the demodulated luminance signal, subsequent to said luminance signal being demodulated; and
first (49) and second converting means, connected to said first and second separating means respectively, for converting the separated frequency-converted video signals to their original frequency at each of said first and second stations respectively.

The invention further provides a method for transmitting and receiving multiplexed audio-video signals through a pair of parallel wires or twisted pair of wires by multiplexing a baseband audio signal and a video signal, the method comprising the steps of:
at a transmitter side,
(A) separating an original signal into a luminance signal and a chrominance signal;
(B) modulating a low-frequency carrier with the separated luminance signal of step (A);
(C) converting the separated chrominance signal of step (A) to a frequency lower than an original frequency of the chrominance signal;
(D) multiplexing the baseband audio signals, the frequency-modulated luminance signal of step (B), and the frequency-converted chrominance signal of step (C) by frequency division, and transmitting the multiplexed signals; and
   at a receiver side,
(E) separating the transmitted signals of step (D) into a two-way audio signal, a frequency modulated luminance signal, and a down-converted chrominance signal;
(F) demodulating the frequency-modulated luminance signal of step (E);
(G) converting the down-converted chrominance signal of step (E) to the original frequency of the chrominance signal; and
(H) mixing the signals of steps (F) and (G) to obtain the original video signal of step (A), and, at the transmitter side, the method further comprising the steps of
(I) pre-emphasizing the luminance signal of step (A) before modulating step (B), by emphasizing a high-frequency component of the luminance signal; and, at the receiver side, the method further comprising the steps of
(J) removing an amplitude component of the frequency modulated luminance signal of step (E) before demodulating step (F); and
(K) suppressing the high frequency component of the demodulated luminance signal of step (F) that was emphasized in step (I), subsequent to step (F).

The invention also provides a method for transmitting and receiving multiplexed audio-video signals between two sets of transmitters/receivers, one transmitter/receiver set at each of a first and second station, by a pair of parallel wires or twisted pair of wires, by multiplexing baseband audio signals and video signals, the baseband audio signals being bidirectional and comprising the steps of separating an original signal into a luminance signal and a chrominance signal;
pre-emphasizing the luminance signal by emphasizing a high frequency component thereof;
modulating a low frequency carrier with the separated luminance signal;
converting a separated chrominance signal to a frequency lower than its original frequency;
multiplexing said first frequency modulated luminance signal and the first frequency converted chrominance signal with baseband audio signals at said first station and simultaneously transmitting each of the multiplexed signals through a pair of parallel wires or twisted pair of wires in a bidirectional manner;
separating a second original signal into a second luminance signal and a second chrominance signal;
pre-emphasizing the second luminance signal by emphasizing a high frequency component thereof;
modulating the second luminance signal with a second low frequency carrier, different from said first low frequency carrier;
converting the second separated chrominance signal to a frequency lower than its original frequency;
multiplexing the second frequency-modulated luminance signal and the second frequency converted chrominance signal with baseband audio signals at said second station and simultaneously transmitting each of the multiplexed signals through the pair of parallel wires or twisted pair of wires in a bidirectional manner such that said multiplexed signals at each of said first and second stations both operate at different frequencies;
separating each of the multiplexed signals into audio signals and frequency-modulated and frequency-converted video signals at each of said first and second stations respectively;
removing an amplitude component from each of the separated frequency-modulated video signals at each of said first and second stations respectively;
frequency demodulating each of the frequency modulated video signals at each of said first and second stations respectively, thereby allowing bidirectional transmission of the audio and video signals;
suppressing the high frequency component of each of the demodulated first and second luminance signals subsequent to said luminance signals being demodulated; and converting the separated frequency-converted video signals to their original frequency at each of said first and second stations respectively.

In order that the present invention may be better understood a detailed description is given hereinafter of embodiments thereof by way of example, with reference to accompanying drawings wherein:
Fig. 1 is a spectrum distribution diagram of NTSC signal:
Fig. 2 is a spectrum distribution diagram obtained when a video carrier is directly frequency-modulated by the NTSC signal:
Fig. 3 is a spectrum distribution diagram obtained when the carrier is demodulated into the NTSC signal:
Fig. 4 and 5 show a first embodiment of the present invention, in which Fig. 4 is a block diagram of the outdoor unit of door-phone camera equipment and Fig. 5 is a block diagram of the indoor unit:
Fig. 6 is a spectrum distribution diagram of a down-converted chrominance signal and a frequency-modulated luminance carrier:
Fig. 7 is a block diagram schematically showing the constitution of bidirectional video transmission equipment of a second embodiment of the invention:
Fig. 8 is a spectrum distribution diagram in a bidirectional video transmission mode:
Fig. 9 is a block diagram schematically showing the constitution of a door-phone camera multiplex transmission system in a third embodiment which carries out the audio-video multiplex transmission method of the invention:
Fig. 10 graphically shows the transmission characteristics of a PVC cable made of parallel wires of 0.65 mm in each diameter and 50 m in length:
Fig. 11 is a spectrum distribution diagram of a frequency-modulated video carrier in the embodiment:
Fig. 12 is a block diagram schematically showing the constitution of an inhouse TV telephone system in a fourth embodiment of the invention:
Fig 13 is a spectrum distribution diagram of bidirectional frequency-modulated video carriers in the embodiment of Fig. 12: and
Fig. 14 is a spectrum distribution diagram of a frequency-modulated NTSC carrier transmitted in another embodiment of the invention.

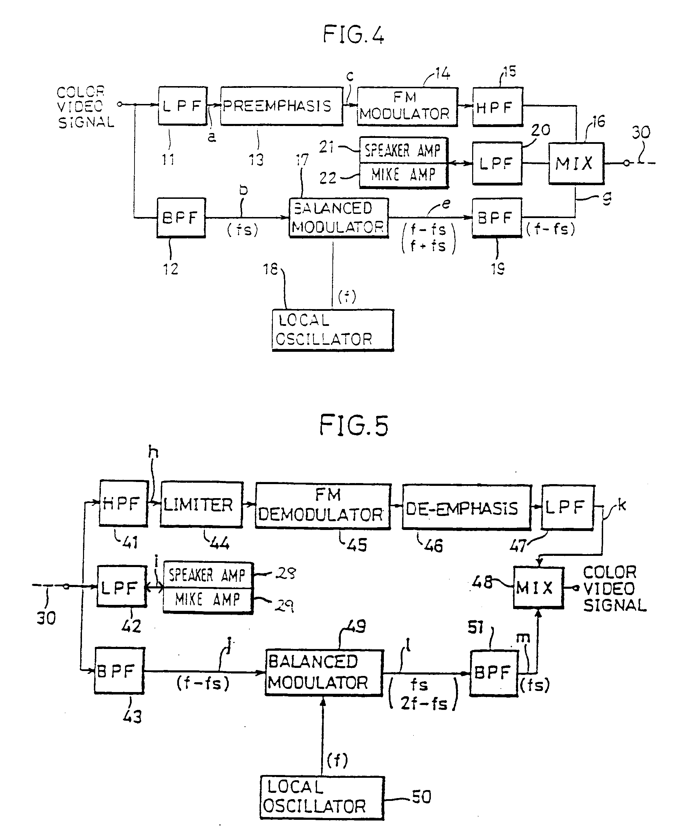

A colour video signal inputted to the outdoor processors shown in Figure 4 is separated into a luminance signal a and a chrominance signal b (frequency fs) through a low-pass filter 11 and a band-pass filter 12 respectively. The luminance signal a is fed to a pre-emphasis circuit 13 which serves to improve the signal-to-noise ratio, S/N, by emphasizing the high-frequency component of the luminance signal a. The luminance signal c thus emphasized is then fed to a frequency-modulator 14. A carrier frequency of 3.4 MHz is allocated to the synchronizing-pulse's tip (i.e. sync-tip) and a frequency of 4.4 MHz to the white-peak of the video signal. The frequency modulated luminance carrier d is fed to a mixer 16 through a high-pass filter 15.

Meanwhile, the chrominance signal b (frequency fs) separated by the band-pass filter 12 is fed to a balanced modulator 17, to which is also fed a carrier of a frequency f from a local oscillator 18. As the chrominance signal b is modulated with the carrier in a balanced manner, it is frequency-converted to a signal having frequency components e which correspond to the sum and the difference of the two frequencies (f + fs, f - fs). These components are fed to a band-pass filter 19, from which is obtained the difference component g between the two frequencies f and fs. In this embodiment, the chrominance signal around 3.58 MHz is down-converted to a signal around 0.629 MHz. The down-converted component g is fed to the mixer 16.

The mixer 16 is also supplied through low-pass filter 20 with two-way audio signals to be baseband-transmitted from mike amplifier 22 or to speaker amplifier 21. The mixer 16 produces an output by multiplexing the frequency-modulated luminance carrier, the down converted chrominance signal and the two-way audio signals, and transmits this output through a pair of telephone communication cables 30.

The multiplexed signals transmitted through the telephone communication cable 30 are inputted to the indoor processors shown in Fig. 5. The input multiplexed signals are introduced to high-pass filer 41, band-pass filter 43 and low-pass filter 42 disposed in the first stage of the indoor processors, whereby the multiplexed signals are separated into frequency-modulated luminance carrier h, two-way audio signals i and down converted chrominance signal j. Through low-pass filter 42, the two-way audio signals are fed to speaker amplifier 28 or from mike amplifier 29 and the frequency-modulated luminance carrier h is fed to a limiter 44, where the amplitude-modulated component is removed. The output of the limiter 44 is fed to a frequency-demodulator 45. The output of the frequency-demodulator 45 is fed to a de-emphasis circuit 46 which suppresses the high-frequency component emphasized on the transmitter (outdoor) side, and the luminance signal k is reproduced through a low-pass filter 47 in the next stage.

Meanwhile, the down-converted chrominance signal j separated by the band-pass filter 43 is fed to a balanced modulator 49, which then modulates the output (frequency f) of a local oscillator 50 and the down-converted chrominance signal j to produce a signal l having frequency components fs and 2f - fs. This output signal l is fed to a band-pass filter 51, from which a chrominance signal m (frequency fs) is restored.

The restored chrominance signal m is fed to a mixer 48, which then mixes the chrominance signal m with the luminance signal k to reproduce the colour video signal.

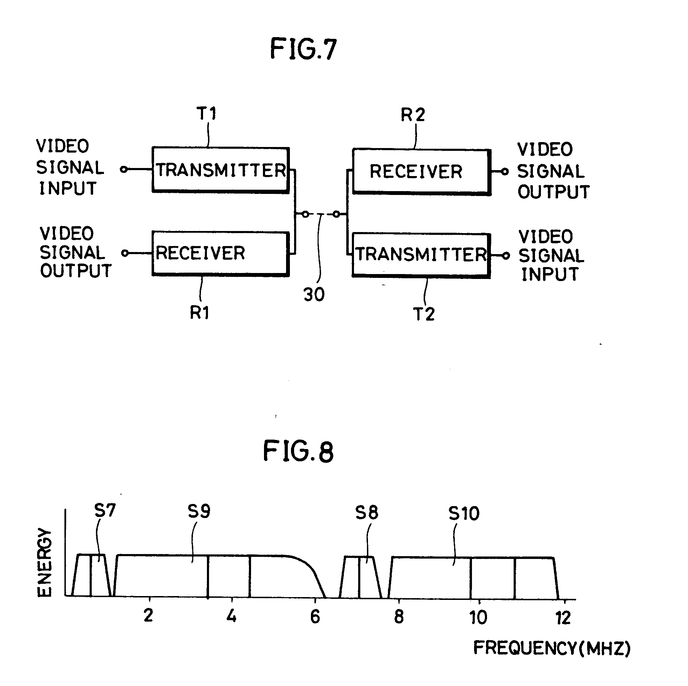

Due to conversion of the chrominance signal (frequency fs; 3.58 MHz) to a lower band around e.g. 0.629 MHz as described above, deviation of the carrier of the luminance signal can be set into a range as low as 3.4 to 4.4 MHz. This is obvious from the fact that, with removal of the chrominance signal component from the NTSC signal, the luminance signal bandwidth of merely 2MHz or more seems to be practically enough as well as home VTRs. Fig. 6 shows a spectrum distribution obtained when the chrominance signal is down-converted to a lower band and the sync-tip and white-peak frequencies of the luminance carrier are allocated at 3.4 and 4.4 MHz. In this diagram, S5 and S6 represent the down-converted chrominance signal and the frequency-modulated luminance carrier, respectively. As will be clear from comparison of Fig. 6 with Fig. 2, the band-width of the luminance carrier transmitted is extremely narrowed in this embodiment. This means that multichannel transmission of video signals becomes possible.

An example of such multichannel transmission is shown in Fig. 7, which is a block diagram of an embodiment for bidirectional transmission of a colour video signal. In this diagram, carrier transmitters T1, T2 and carrier receivers R1,R2 such as those shown in Fig. 4 and 5 respectively are connected to the ends of a telephone communication cable 30, wherein bidirectional transmission of a colour video signal is rendered possible by properly allocating the luminance carrier modulation frequency and the chrominance signal conversion frequency in such a manner as to avert the spectra of individual channels from overlapping. The spectra obtained in this example are shown in Fig. 8, wherein S7, S8 and S9, S10 represent the spectra of down-converted chrominance signals and those of frequency-modulated luminance carriers, respectively.

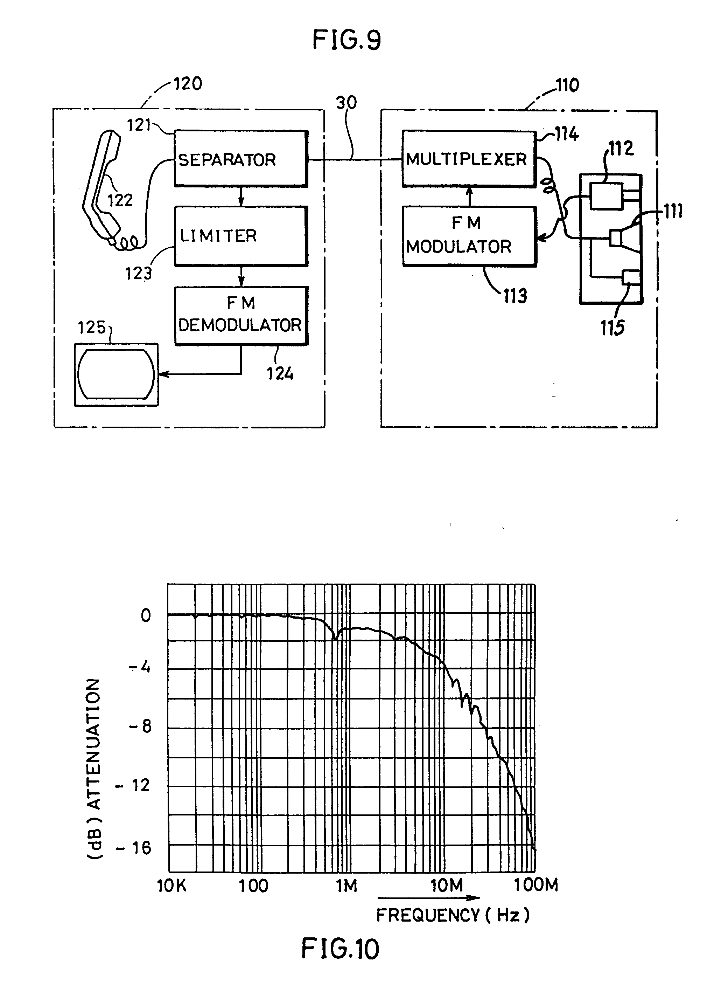

Fig. 9 is a block diagram schematically showing the arrangement of another embodiment in accordance with the present invention. This diagram illustrates a door-phone camera multiplex transmission system consisting of an outdoor unit 110 and an indoor unit 120. The outdoor unit 110 comprises a speaker 111, a mike 115 and a CCD camera 112 for picking up visitors' figure and voice and also internally includes an FM modulator 113 for frequency-modulating a carrier with the video signal outputted from the CCD camera 112, and a multiplexer 114 for multiplexing the two-way audio signals and the frequency-modulated video carrier.

The indoor unit 120 comprises a separator 121 for separating the multiplexed signals transmitted from the outdoor unit 110 into the audio signal and the video carrier, a handset 122, a limiter 123 for removing the amplitude-modulated component from frequency-modulated video carrier separated by the separator 121, an FM demodulator 124 for demodulating the frequency-modulated carrier subsequent to removal of its amplitude-modulated component, and a television monitor 125 fed with a demodulated video signal. The outdoor unit 110 and the indoor unit 120 are interconnected by means of an inhouse cable 30. The cable 30 is composed of, for example, a pair of parallel PVC-coated wires each of 0.65 mm diameter.

The operation of this embodiment will now be described.

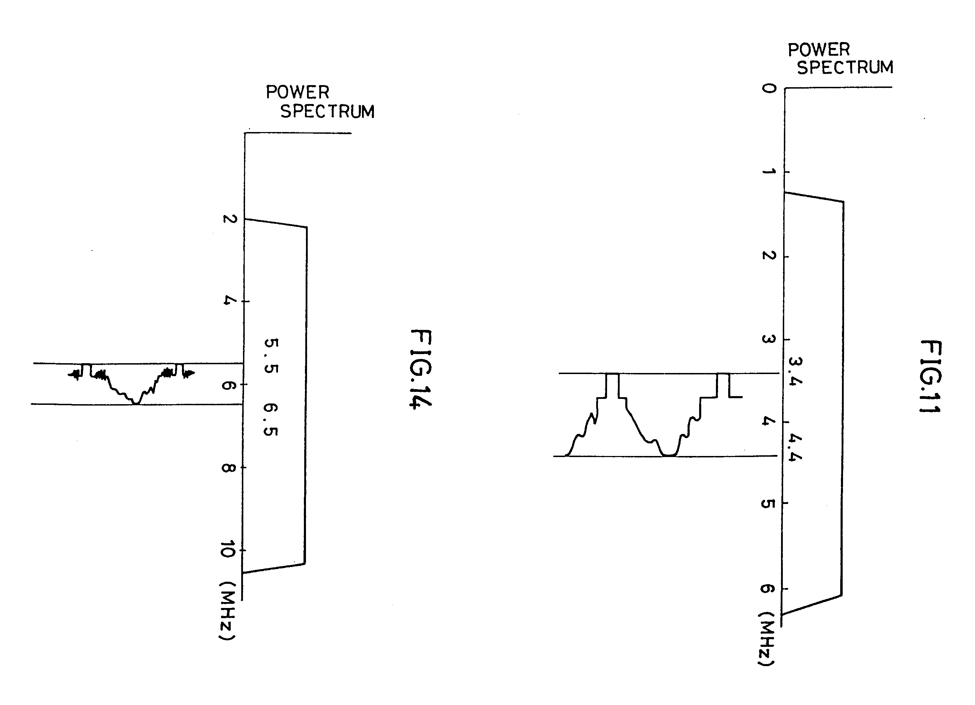

Fig. 10 graphically shows the measured characteristic curve of the cable 30 (50 m in length) having a characteristic impedance of 140 ohms which is employed in the embodiment. Dips at 650 kHz and 3 MHz in this graph result particularly from impedance mis-matching at the cable terminators. The uneven portion of the curve at frequencies above 10 MHz results from multi-reflection generated at positions stapling the cable on walls and beams. The above is inferred from the fact that the dip frequencies are changed by changes in the length of the cable. As will be understood from Fig. 10, the cable employed in this embodiment has transmission characteristics within -4 dB up to 10 MHz. Therefore, when a carrier is frequency-modulated in the FM modulator 113 with the video signal outputted with a bandwidth of 2 to 3 MHz from the CCD camera 112 in the outdoor unit 110, the carrier spectrum is extended up to a range of 1.5 to 6.5 MHz as shown in Fig. 11, but the cable 30 is still capable of transmitting the frequency-modulated video carrier properly with slight attenuation.

Meanwhile, the audio signal outputted from the mike amplifier in the handset 111 is multiplexed with the frequency-modulated video carrier by the multiplexer 114. At this stage, crosstalk between the audio signal and the video carrier can be prevented by selectively allocating the audio channel to a frequency range below 10 kHz. The audio signal multiplexed with the video carrier can be bidirectionally transmitted as in the conventional interphone line due to its baseband-transmission performed usually in an ordinary interphone or the like.

The multiplexed signals thus produced are transmitted from the outdoor unit 110 to the indoor unit 120 through the cable 30.

The cable 30 used in this embodiment is not furnished with an electro-magnetic shield function as is a co-axial cable so that when its transmission span is relatively long, a problem arises with regard to the leakage electric field to external instruments. This problem will be discussed in a paper to be issued; "Door Phone Camera's Multiplex Transmission System", IEEE Transaction on Consumer Electronics.

In Fig. 9, the multiplexed signals transmitted through the cable 30 are inputted to the separator 121 of the indoor unit 120, where the video carrier is separated with the audio signals by means of the high-pass filter (HPF) as shown in Fig. 5. Since the high-pass filter is set so as to perform enough attenuation of the medium waves and the limiter 123 to perform a complete limiting action of those, it becomes possible, in any place except the vicinity of a medium wave broadcasting station where the electric field intensity is extremely high, to achieve complete suppression of interference by some external radio waves during transmission through the cable 30. Multipath reflection is prone to occur in the carrier transmission through the cable due to some change in the environmental condition of the cable as it is fixed with staples at predetermined intervals or is covered with an iron pipe or the like. However, the video carrier, even if subjected to the uneven attenuation resulting from such multipath reflection, can be kept free from harmful influence of the multipath reflection and so forth by the limiter function.

The frequency-modulated video carrier with its unevenly attenuated component that is suppressed in the limiter 123, is demodulated in the FM demodulator 124 and then is fed to the television monitor 125.

Since the audio signal and the video signal are different in pass-band from each other as described previously, no crosstalk occurs therebetween and, by the function of the high-pass filter and the limiter 123, which sufficiently suppresses the amplitude-modulated component resulting from external radio waves and so forth, a remarkably high quality is attainable in the picture reproduced on the television monitor 125. Furthermore, when replacing the interphone system in use with a TV door-phone system (including such as CCD camera 112 in the embodiment), there is no necessity to install a new co-axial cable for transmission of the video signal, and the already installed telephone cable can be converted to consequently save the installation cost.

By using a pair of parallel PVC-coated wires as a cable 30 in the above embodiment, it is also possible, as shown in Fig. 12, to realize an inhouse television telephone system for bidirectional transmission of the video signals.

In Fig. 12, a terminal unit 140 comprises a hand-set 141, a CCD camera 142 for picking up a speaker, an FM modulator 143 for frequency-modulating a carrier with the video signal outputted from the CCD camera 142, a multiplexer/separator 144 for multiplexing the audio signal from the mike amplifier and the frequency-modulated video carrier while separating the transmitted multiplexed signals into the audio signal and the video carrier, a limiter 145 for removing the amplitude-modulated component from the separated video carrier, an FM demodulator 146 for demodulating the video carrier subsequent to the limiter 145, and a television monitor 147 supplied with the demodulated video signal. Another terminal unit 150 has the same constitution as that of the aforesaid terminal unit 140. These terminal units 140 and 150 are connected with each other through a single cable 60, which has the same transmission characteristics as that of the cable 30 shown previously in Fig. 10.

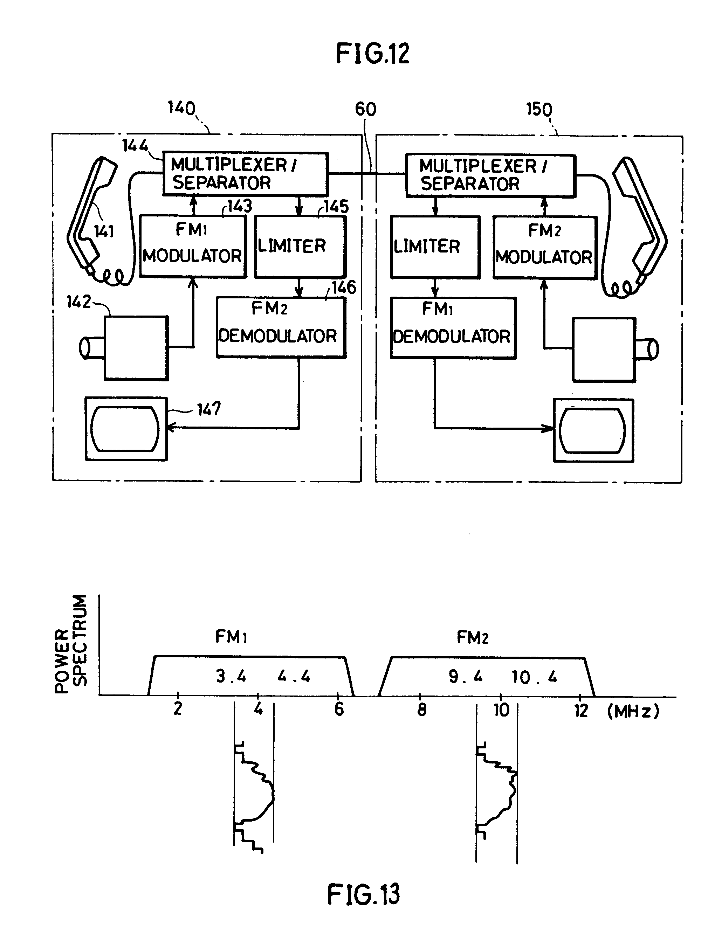

If the video carriers transmitted from the two terminal units 140 and 150 are so selected that the respective carrier spectra thereof are distributed within a range of 1 to 13 MHz as shown in Fig. 13 and allocated without mutual overlapping, then it becomes possible for the cable 60 to transmit the video carriers properly to the receiving ends without substantial attenuation, whereby the cable characteristic deterioration of the carrier at high frequencies can be compensated by a cable compensator to consequently attain proper reproduction of picture without substantially deteriorating the signal-to-noise ratio.

Such composite signals as NTSC (National Television System Committee) signal or PAL (Phase Alternation Line) signal are composed of the chrominance and luminance signals, and the carrier directly frequency-modulated with the composite signal can be transmitted through the above-mentioned cable. In an exemplary case of transmission of NTSC signal, Fig. 14 shows the frequency distribution of an FM carrier on "low-band colour mode" formerly adopted in four-head videotape recorders for broadcasting stations. As will be clear from comparison between the two cable transmission characteristics shown in Figs. 10 and 14, the directly frequency-modulated carrier spectrum as shown in Fig. 14 ranges substantially within a band of 2 to 11 MHz so that the high frequency component of the carrier is slightly deteriorated by the cable transmission, but such deterioration is so small as to be easily compensated for. Although such "low-band colour mode" was adopted in the initial-stage colour videotape recorders, it was replaced soon after with "high-band colour mode" on the basis of improvements in both tape and head performances as the former was disadvantageous with regard to tape noise and so forth due to a small modulation index. However, since noise sources in this cable are principally interference-induced by external radio waves and usually very small, the low-band colour mode is sufficiently effective in practical use because, when the cable length is less than a few of hundreds meters, a considerably high C/N (ratio of carrier to noise) is attainable in most cases.

Another means for transmission of colour signals, is by a so-called TCI (Time Compression Integration) signal transmission system which multiplexes a time-compress colour-difference signal during the horizontal blanking period of a luminance signal by line alternation.

The TCI signal in which the luminance signal is supposed to have a bandwidth of 3 MHz, can comprise the colour-difference signals (R - Y) and (B - Y), of 0.4 MHz bandwidth, in which effective duration of a horizontal scan, 53 µs is time-compressed to one-seventh, 7.5 µs. Since the horizontal blanking duration of NTSC signal amounts to about 11 µs, the time-compressed colour difference signals are able to be accommodated along with a horizontal narrower pulse of 2 µs pulsewidth during the blanking period in line alternation.

As shown in S5 of Fig. 6 and in S7 of Fig. 8, the passband of the down-converted chrominance signal is unfortunately overlapped with those of medium waves for broadcasting, so that in cases likely to suffer interference by broadcasting waves. Transmission using the carrier frequency-modulated with the TCI signal may be preferable rather than the transmission using the down-converted chrominance signal.

The method of audio-video multiplex transmission according to the present invention is applicable to PAL, SECAM or TCI signal as well as to the aforementioned NTSC signal.

Furthermore, if the signal-to-noise ratio (S/N) of the chrominance signal is deteriorated by interference of some external radio waves induced along the telephone communication cable, the S/N can be improved by use of a comb filter in the NTSC or PAL system where there exists a line interrelation. Also in the SECAM system where the chrominance signal is frequency-modulated, the S/N can be improved by the provision of a limiter.

## Claims

1. An apparatus for transmitting and receiving multiplexed audio-video signals through a pair of parallel wires or twisted pair of wires (30) by multiplexing a baseband audio signal and a video signal, the apparatus comprising a transmitter including,
first separating means (11,12) for separating an original signal into a luminance signal (a) and a chrominance signal (b);
first modulating means (14) for modulating a low-frequency carrier with the separated luminance signal (c);
first converting means (17) for converting the separated chrominance signal (b) to a frequency lower than its original frequency;
multiplexing means (16) for multiplexing the base band audio signals, the frequency-modulated luminance signal, and the frequency-converted chrominance signal by frequency division, and for transmitting the multiplexed signals; and
a receiver including,
second separating means (41, 42, 43), connected to said multiplexing means (16) via said wires (30), for separating the transmitted signals into a two-way audio signal (i), a frequency modulated luminance signal (h), and a down-converted chrominance signal (j);
demodulating means (45) for demodulating the frequency-modulated luminance signal;
second converting means (49) for converting the down-converted chrominance signal (j) to its original frequency; and
mixing means (48) for mixing the signals to obtain the original video signal,
the transmitter further comprising pre-emphasizing means (13), connected to said first separating means, for pre-emphasizing the luminance signal (a) prior to modulation thereof, by emphasizing a high-frequency component of the luminance signal; and that the receiver further comprises
limiting means (44), connected to said second separating means, for removing an amplitude component of the frequency modulated luminance signal; and
suppressing means (46), connected to said demodulating means, for suppressing the high frequency component of the demodulated luminance signal, subsequent to said luminance signal being demodulated.

2. The apparatus according to claim 1, wherein said apparatus further comprises a first local oscillating means (18), connected to said first converting means (17) receiving a chrominance signal (b) having frequency component of fs, for generating a carrier of a frequency f and a second local oscillating means (50), connected to said second converting means, for generating a carrier of a frequency f, and wherein said first converting means converts the chrominance signal of frequency fs to a signal having frequency components (e) which correspond to the sum (f+fs) and the difference (f-fs) of said carrier frequency and said chrominance signal, and said second converting means (49) converts a chrominance signal (j) to a signal (1) having frequency components of fs and 2f-fs.

3. The apparatus according to claim 1 or 2, wherein the apparatus further comprises:
first high pass filter means (15), connected to said first modulating means (14) for high pass filtering the frequency modulated luminance signal;
second low pass filtering means (20), connected to said multiplexing means (16), for low pass filtering of the baseband audio signal prior to said multiplexing means;
second band pass filtering means (19), connected to said first converting means (17), for passing the signal having a frequency component which corresponds to the difference (f-fs) of said carrier frequency and said chrominance signal;
fourth low pass filtering means (47), connected to said suppressing means (46), for low pass filtering the frequency demodulated luminance signal; and
fourth band pass filtering means (51), connected to said second converting means (49), for passing the signal having a frequency component of fs.

4. The apparatus according to any of the preceding claims, wherein said first separating means includes:
first low pass filtering means (11), connected to said pre-emphasizing means (13), for low pass filtering the luminance signal prior to pre-emphasizing thereof;
first band pass filtering means (12), connected to first converting means (17), for low band filtering the chrominance signal (b), and wherein said second separating means includes:
second high pass filtering means (41), connected to said limiting means (44), for high pass filtering the frequency-modulated luminance signal prior to said limiting means;
third low pass filtering means (42), connected to said wires (30), for low pass filtering the baseband audio signal;
third band pass filtering means (43), connected to said second converting means (49), for band pass filtering the frequency converted chrominance signal prior to said second converting means.

5. An apparatus for transmitting and receiving multiplexed audio-video signals between two sets of transmitters/receivers, one transmitter/receiver set at each of a first and second station, by a pair of parallel wires or twisted pair of wires (30), by multiplexing baseband audio signals and video signals, the baseband audio signals being bidirectional and comprising
first separating means (11, 12) for separating a first original signal into a luminance signal (a) and a first chrominance signal (b);
first pre-emphasizing means (13), connected to said first separating means, for pre-emphasizing the first luminance signal (a) by emphasizing a high frequency component thereof;
first modulating means (14) for modulating a first low frequency carrier with the separated first luminance signal (c);
first converting means (17) for converting the separated chrominance signal (b) to a frequency lower than its original frequency;
first multiplexing means (16), for multiplexing said first frequency modulated luminance signal and the first frequency converted chrominance signal with baseband audio signals at said first station and for simultaneously transmitting each of the multiplexed signals through a pair of parallel wires or twisted pair of wires in a bidirectional manner;
second separating means for separating a second original signal into a second luminance signal (a) and a second chrominance signal (b);
second pre-emphasizing means, connected to said second separating means for pre-emphasizing the second luminance signal (a) by emphasizing a high frequency component thereof;
second modulating means for modulating the second luminance signal with a second low frequency carrier, different from said first low frequency carrier;
second converting means for converting the second separated chrominance signal to a frequency lower than its original frequency;
second multiplexing means (48), for multiplexing the second frequency-modulated luminance signal and the second frequency converted chrominance signal with baseband audio signals at said second station and for simultaneously transmitting each of the multiplexed signals through the pair of parallel wires or twisted pair of wires in a bidirectional manner such that said multiplexed signals at each of said first and second stations both operate at different frequencies;
third (41, 42, 43) and fourth separating means for separating each of the multiplexed signals into audio signals and frequency-modulated and frequency converted video signals at each of said first and second stations respectively;
first (44) and second limiting means, connected to said first and second separating means, respectively, for removing an amplitude component from each of the separated frequency-modulated video signals at each of said first and second stations respectively;
first (45) and second frequency demodulating means, connected to said first and second limiting means, respectively, for frequency demodulating each of the frequency modulated video signals at each of said first and second stations respectively, thereby allowing bidirectional transmission of the audio and video signals;
first (46) and second suppressing means connected to the first and second demodulating means respectively for suppressing the high frequency component of the demodulated luminance signal, subsequent to said luminance signal being demodulated; and
first (49) and second converting means, connected to said first and second separating means, respectively, for converting the separated frequency-converted video signals to their original frequency at each of said first and second stations respectively.

6. A method for transmitting and receiving multiplexed audio-video signals through a pair of parallel wires or twisted pair of wires (30) by multiplexing a baseband audio signal and a video signal, the method comprising the steps of:
at a transmitter side,
(A) separating an original signal into a luminance signal (a) and a chrominance signal (b);
(B) modulating a low-frequency carrier with the separated luminance signal (c) of step (A);
(C) converting the separated chrominance signal (b) of step (A) to a frequency lower than an original frequency of the chrominance signal;
(D) multiplexing the baseband audio signals, the frequency-modulated luminance signal of step (B), and the frequency-converted chrominance signal of step (C) by frequency division, and transmitting the multiplexed signals; and
at a receiver side,
(E) separating the transmitted signals of step (D) into a two-way audio signal (i), a frequency modulated luminance signal (h), and a down-converted chrominance signal (j);
(F) demodulating the frequency-modulated luminance signal of step (E);
(G) converting the down-converted chrominance signal (j) of step (E) to the original frequency of the chrominance signal; and
(H) mixing the signals of steps (F) and (G) to obtain the original video signal of step (A), and at the transmitter side, the method further comprising the steps of
(I) pre-emphasizing the luminance signal (a) of step (A) before modulating step (B), by emphasizing a high-frequency component of the luminance signal; and at the receiver side, the method further comprising the steps of
(J) removing an amplitude component of the frequency modulated luminance signal of step (E) before demodulating step (F); and
(K) suppressing the high frequency component of the demodulated luminance signal of step (F) that was emphasized in step (I), subsequent to step (F).

7. The method according to claim 6, wherein said method further comprises the steps of:
(L) generating a carrier of a frequency f at the transmitter side;
(M) generating a carrier of a frequency f at the receiver side;
(N) receiving a chrominance signal of step (A) having frequency component of fs and a carrier of step (L) and converting the chrominance signal of frequency fs to a signal having frequency components (e) which correspond to the sum (f+fs) and the difference (f-fs) of said carrier frequency and said chrominance signal, and
(O) receiving a chrominance signal of step (E) having frequency component of fs and a carrier of step (M) and converting the chrominance signal of frequency f-fs to a signal having frequency components of fs and 2f-fs.

8. The method according to claim 6 or 7, wherein said method further comprises the steps of:
(P) high pass filtering the frequency modulated luminance signal before multiplexing and transmitting step (D);
(Q) low pass filtering of the baseband audio signal;
(R) passing the signal having a frequency component which corresponds to the difference (f-fs) of said carrier frequency and said chrominance signal before multiplexing and transmitting step (D);
(S) low pass filtering the frequency demodulated luminance signal before mixing step (H); and
(T) passing the signal having a frequency component of fs before multiplexing step (H).

9. The method according to claim 6, 7 or 8, wherein said method further comprises the step of:
(U) low pass filtering the luminance signal before pre-emphasizing step (I);
(V) low band filtering the chrominance signal (b) before converting step (C);
(W) high pass filtering the frequency-modulated luminance signal of step (D) before removing step (J);
(X) low pass filtering the baseband audio signal;
(Y) band pass filtering the frequency converted chrominance signal of step (D) before converting step (G).

10. A method for transmitting and receiving multiplexed audio-video signals between two sets of transmitters/receivers, one transmitter/receiver set at each of a first and second station, by a pair of parallel wires or twisted pair of wires (30), by multiplexing baseband audio signals and video signals, the baseband audio signals being bidirectional and comprising the steps of separating an original signal into a luminance signal (a) and a chrominance signal (b);
pre-emphasizing the luminance signal (a) by emphasizing a high frequency component thereof;
modulating a low frequency carrier with the separated luminance signal (c);
converting a separated chrominance signal (b) to a frequency lower than its original frequency;
multiplexing said first frequency modulated luminance signal and the first frequency converted chrominance signal with baseband audio signals at said first station and simultaneously transmitting each of the multiplexed signals through a pair of parallel wires or twisted pair of wires in a bidirectional manner;
separating a second original signal into a second luminance signal (a) and a second chrominance signal (b);
pre-emphasizing the second luminance signal (a) by emphasizing a high frequency component thereof;
modulating the second luminance signal with a second low frequency carrier, different from said first low frequency carrier;
converting the second separated chrominance signal to a frequency lower than its original frequency;
multiplexing the second frequency-modulated luminance signal and the second frequency converted chrominance signal with baseband audio signals at said second station and simultaneously transmitting each of the multiplexed signals through the pair of parallel wires or twisted pair of wires in a bidirectional manner such that said multiplexed signals at each of said first and second stations both operate at different frequencies;
separating each of the multiplexed signals into audio signals and frequency-modulated and frequency converted video signals at each of said first and second stations respectively;
removing an amplitude component from each of the separated frequency-modulated video signals at each of said first and second stations respectively;
frequency demodulating each of the frequency modulated video signals at each of said first and second stations respectively, thereby allowing bidirectional transmission of the audio and video signals;
suppressing the high frequency component of each of the demodulated first and second luminance signals subsequent to said luminance signals being demodulated; and
converting the separated frequency-converted video signals to their original frequency at each of said first and second stations respectively.

## Patentansprüche

1. Vorrichtung zum Senden und Empfangen Audio-Video-Signale im Multiplexbetrieb über ein Paar parallele Drähte oder ein verdrilltes Paar Drähte (30) durch Multiplexen eines Basisband-Audiosignals und eines Videosignals, wobei die Vorrichtung einen Sender umfaßt, der beinhaltet:
ein erstes Trennmittel (11, 12) für das Trennen eines ursprünglichen Signals in ein Helligkeitssignal (a) und ein Farbwertsignal (b);
ein erstes Modulationsmittel (14) für das Modulieren eines Niederfrequenzträgers mit dem abgetrennten Helligkeitssignal (c);
ein erstes Konvertierungsmittel (17) für das Konvertieren des abgetrennten Farbwertsignals (b) auf eine Frequenz niedriger als seine ursprüngliche Frequenz;
ein Multiplexmittel (16) für das Multiplexen der Basisband-Audiosignale, des frequenzmodulierten Helligkeitssignals und des frequenzkonvertierten Farbwertsignals durch Frequenzteilung und für die Übertragung der verschachtelten Signale; und
einen Empfänger, der beinhaltet:
ein zweites Trennmittel (41, 42, 43), das mit dem Multiplexmittel (16) über die Drähte (30) verbunden ist, um die übertragenen Signale in ein Zweiwege-Audiosignal (i), ein frequenzmoduliertes Helligkeitssignal (h) und ein abwärts konvertiertes Farbwertsignal (j) zu trennen;
ein Demodulationsmittel (45) für das Demodulieren des ten Hel frequenzmodulierten Helligkeitssignals;
ein zweites Konvertierungsmittel (49) für das Konvertieren des abwärts konvertierten Farbwertsignals (j) auf seine ursprüngliche Frequenz; und
ein Mischmittel (48) für das Mischen der Signale, um das ursprüngliche Videosignal zu erhalten,
wobei der Sender weiterhin ein Voranhebungsmittel (13), umfaßt, das mit dem ersten Trennmittel verbunden ist, um das Helligkeitssignal (a) vor der Modulation desselben voranzuheben, indem eine Hochfrequenzkomponente des Helligkeitssignals angehoben wird; und wobei der Empfänger weiterhin umfaßt:
ein Begrenzungsmittel (44), das mit dem zweiten Trennmittel verbunden ist, um eine Amplitudenkomponente des frequenzmodulierten Helligkeitssignals zu entfernen; und
ein Unterdrückungsmittel (46), das mit dem Demodulationsmittel verbunden ist, um die Hochfrequenzkomponente des demodulierten Helligkeitssignals zu unterdrücken, nachdem das Helligkeitssignal demoduliert worden ist.

2. Vorrichtung nach Anspruch 1, wobei diese Vorrichtung weiterhin ein erstes lokales Oszillationsmittel (18), das mit dem ersten Konvertierungsmittel (17) verbunden ist, das ein Farbwertsignal (b) empfängt, das eine Frequenzkomponente fs hat, um einen Träger von einer Frequenz f zu erzeugen und ein zweites lokales Oszillationsmittel (50) umfaßt, das mit dem zweiten Konvertierungsmittel verbunden ist, um einen Träger mit einer Frequenz f zu erzeugen und wobei das erste Konvertierungsmittel das Farbwertsignal von einer Frequenz fs in ein Signal konvertiert, das Frequenzkomponenten (e) hat, welche die Summe (f + fs) und die Differenz (f - fs) dieser Trägerfrequenz und dieses Farbwertsignals sind und wobei das zweite Konvertierungsmittel (49) ein Farbwertsignal (j) in ein Signal (1) konvertiert, das Frequenzkomponenten fs und 2fs hat.

3. Vorrichtung nach Anspruch 1 oder 2, wobei die Vorrichtung weiterhin umfaßt:
ein erstes Hochpaßfiltermittel (15), das mit dem ersten Modulationsmittel (14) für ein Hochpaßfiltern des frequenzmodulierten Farbwertsignals verbunden ist;
ein zweites Tiefpaßfiltermittel (20), das mit dem Multiplexmittel (16) für ein Tiefpaßfiltern des Basisband-Audiosignals vor diesem Multiplexmittel verbunden ist;
ein zweites Bandpaßfilterungsmittel (19), das mit dem ersten Konvertierungsmittel (17) verbunden ist, um das Signal hindurchzulassen, das eine Frequenzkomponente hat, welche der Differenz (f - fs) der Trägerfrequenz und des Farbwertsignals entspricht;
ein viertes Tießpaßfiltermittel (47), das mit dem Unterdrückungsmittel (46) verbunden ist, um das frequenzmodulierte Helligkeitssignal im Tiefpaß zu filtern; und
ein viertes Bandpaßfiltermittel (51), das mit dem zweiten Konvertierungsmittel (49) verbunden ist, um das Signal durchzulassen, das eine Frequenzkomponente fs hat.

4. Vorrichtung nach einem der vorhergehenden Ansprüche, wobei das erste Trennmittel beinhaltet:
ein erstes Tiefpaßfiltermittel (11), das mit dem Voranhebungsmittel (13) verbunden ist, um das Helligkeitssignal vor der Voranhebung desselben im Tiefpaß zu filtern;
ein erstes Bandpaßfiltermittel (12), das mit dem ersten Konvertierungsmittel (17) verbunden ist, um eine Bandpaßfilterung des Farbwertsignals (b) vorzunehmen und wobei das zweite Trennmittel beinhaltet:
ein zweites Hochpaßfiltermittel (41), das mit dem Begrenzungsmittel (44) verbunden ist, um ein Hochpaßfiltern des frequenzmodulierten Helligkeitssignal vor dem Begrenzungsmittel durchzuführen;
ein drittes Tiefpaßfiltermittel (42), das mit den Drähten (30) verbunden ist, um das Basisband-Audiosignal im Tiefpaß zu filtern;
ein drittes Bandpaßfiltermittel (43), das mit dem zweiten Konvertierungsmittel (49) verbunden ist, um das frequenzkonvertierte Farbwertsignal vor dem zweiten Konvertierungmittel im Bandpaß zu filtern.

5. Vorrichtung für das Senden und Empfangen von Audio-Video-Signalen im Multiplexbetrieb zwischen zwei Sender/Empfänger-Geräten, einem Sender/Empfängergerät an je einer ersten und einer zweiten Station, über ein Paar parallele Drähte oder ein verdrilltes Paar Drähte (30) durch Multiplexen von Basisband-Audiosignalen und Videosignalen, wobei die Basisband-Audiosignale Zweirichtungssignale sind, welche umfaßt:
ein erstes Trennmittel (11, 12) für das Trennen eines ersten ursprünglichen Signals in ein Helligkeitssignal (a) und ein erstes Farbwertsignal (b);
ein erstes Voranhebungsmittel (13), das mit dem ersten Trennmittel verbunden ist, um das erste Helligkeitssignal (a) durch Anheben einer Hochfrequenzkomponente davon voranzuheben;
ein erstes Modulationsmittel (14) für das Modulieren eines ersten Niederfrequenzträgers mit dem abgetrennten ersten Helligkeitssignal (c);
ein erstes Konvertierungsmittel (17) für das Konvertieren des abgetrennten Farbwertsignals (b) auf eine Frequenz niedriger als dessen ursprüngliche Frequenz;
ein erstes Multiplexermittel (16) für das Multiplexen des ersten frequenzmodulierten Helligkeitssignals und des ersten frequenzkonvertierten Farbwertsignals mit Basisband-Audiosignalen an der ersten Station und für das gleichzeitige Senden jedes in Multiplexbetrieb gebrachten Signals über ein Paar parallele Drähte oder ein verdrilltes Paar Drähte im Zweirichtungsbetrieb;
ein zweites Trennmittel für das Auftrennen eines zweiten ursprünglichen Signals in ein zweites Helligkeitssignal (a) und ein zweites Farbwertsignal (b);
ein zweites Voranhebungsmittel, das mit dem zweiten Trennmittel verbunden ist, für ein Voranheben des zweiten Helligkeitssignals (a) durch Anheben einer Hochfrequenzkomponenten davon;
ein zweites Modulationsmittel für das Modulieren des zweiten Helligkeitssignals mit einem zweiten Niederfrequenzträger, der von dem ersten Niederfrequenzträger verschieden ist;
ein zweites Konvertierungsmittel für das Konvertieren des zweiten Farbwertsignals auf eine Frequenz niedriger als seine ursprüngliche Frequenz;
ein zweites Multiplexmittel (48) für das Multiplexen des zweiten frequenzmodulierten Helligkeitssignals und des zweiten frequenzkonvertierten Farbwertsignals mit den Basisband-Audiosignalen an der zweiten Station und für das gleichzeitige Übertragen jedes Signals im Multiplexbetrieb über ein Paar parallele Drähte oder ein verdrilltes Paar Drähte im Zweirichtungsbetrieb derart, daß die im Multiplexbetrieb übertragenen Signale an jeder ersten und zweiten Station bei verschiedenen Frequenzen arbeiten;
ein drittes (41, 42, 43) und ein viertes Trennmittel für das Auftrennen jedes im Multiplexbetrieb übertragenen Signals in Audiosignale und in frequenzmodulierte und frequenzkonvertierte Videosignale an jeder ersten beziehungsweise zweiten Station;
ein erstes (44) und zweites Begrenzungsmittel, das mit dem ersten beziehungsweise dem zweiten Trennmittel verbunden ist, um eine Amplitudenkomponente von jedem der getrennten frequenzmodulierten Videosignale an jeder ersten beziehungsweise zweiten Station zu entfernen;
ein erstes (45) und ein zweites Frequenz-Demodulationsmittel, das mit dem ersten beziehungsweise dem zweiten Begrenzungsmittel verbunden ist, um jedes der frequenzmodulierten Videosignale an jeder ersten beziehungsweise zweiten Station einer Frequenzdemodulation zu unterziehen und dadurch eine Zweirichtungs-Übertragung der Audio- und Videosignale zu gestatten;
ein erstes (46) und zweites Unterdrückungsmittel, das mit dem ersten beziehungsweise dem zweiten Demodulationsmittel verbunden ist, um die Hochfrequenzkomponente des demodulierten Helligkeitssignals zu unterdrücken, nachdem dieses Helligkeitssignal demoduliert worden ist; und
ein erstes (49) und zweites Konvertierungsmittel, das mit dem ersten beziehungsweise dem zweiten Trennmittel verbunden ist, um die getrennten frequenzkonvertierten Videosignale an jeder ersten beziehungsweise zweiten Station in ihre ursprüngliche Frequenz zu konvertieren.

6. Verfahren für das Senden und Empfangen von Audio-Videosignalen im Multiplexbetrieb über ein Paar parallele Drähte oder ein verdrilltes Paar Drähte (30) durch Multiplexen eines Basisband-Audiosignals und eines Videosignals, wobei das Verfahren die folgenden Schritte umfaßt: auf einer Senderseite,
(A) Trennen eines Originalsignals in ein Helligkeitssignal (a) und ein Farbwertsignal (b);
(B) Modulieren eines Niederfrequenzträgers mit dem abgetrennten Helligkeitssignal (c) von Schritt (A);
(C) Konvertieren des abgetrennten Farbwertsignals (b) von Schritt (A) auf eine Frequenz niedriger als die ursprüngliche Frequenz des Farbwertsignals;
(D) Multiplexen der Basisband-Audiosignale, des frequenzmodulierten Helligkeitssignals von Schritt (B) und des frequenzkonvertierten Farbwertsignals von Schritt (C) durch Frequenzteilung und Übertragen der in Multiplexbetrieb gebrachten Signale; und
auf einer Empfängerseite,
(E) Auftrennen der übertragenen Signale von Schritt (D) in ein Zweiwege-Audiosignal (i), ein frequenzmoduliertes Helligkeitssignal (h) und ein abwärts konvertiertes Farbwertsignal (j);
(F) Demodulieren des frequenzmodulierten Helligkeitssignals von Schritt (E);
(C) Konvertieren des abwärts konvertierten Farbwertsignals (j) von Schritt (E) auf die Originalfrequenz des Farbwertsignals;
(H) Mischen der Signale von Schritt (F) und (G), um das ursprüngliche Videosignal von Schritt (A) zu erhalten, und wobei auf der Senderseite das Verfahren weiterhin folgenden Schritt umfaßt:
(I) Voranheben des Helligkeitssignals (a) von Schritt (A) vor dem Modulationsschritt (B) durch Anheben einer Hochfrequenzkomponente des Helligkeitssignals; und wobei auf der Empfängerseite das Verfahren weiterhin die folgenden Schritte umfaßt:
(J) Entfernen einer Amplitudenkomponente des frequenzmodulierten Helligkeitssignals von Schritt (E) vor dem Demodulationsschritt (F); und
(K) Unterdrücken der Hochfrequenzkomponente des demodulierten Helligkeitssignals von Schritt (F), die in Schritt (I) angehoben wurde, anschließend an Schritt (F).

7. Verfahren nach Anspruch 6, wobei dieses Verfahren weiterhin die folgenden Schritte umfaßt:
(L) Erzeugen eines Trägers mit einer Frequenz f auf der Senderseite;
(M) Erzeugen eines Trägers mit der Frequenz f auf der Empfängerseite;
(N) Empfangen eines Farbwertsignals von Schritt (A), das eine Frequenzkomponente fs hat und eines Trägers von Schritt (L) und Konvertieren des Farbwertsignals der Frequenz fs in ein Signal, das Frequenzkomponenten (e) hat, welche der Summe (f + fs) und der Differenz (f - fs) dieser Trägerfrequenz und dieses Farbwertsignals entsprechen, und
(O) Empfangen eines Farbwertsignals von Schritt (E), das eine Frequenzkomponente fs hat und eines Trägers von Schritt (M) und Konvertieren des Farbwertsignals mit der Frequenz f - fs in ein Signal, das Frequenzkomponenten fs und 2f - fs hat.

8. Verfahren nach Anspruch 6 oder 7, wobei dieses Verfahren weiterhin die folgenden Schritte umfaßt:
(P) Hochpaßfiltern des frequenzmodulierten Helligkeitssignals vor dem Multiplex- und Übertragungsschritt (D);
(Q) Tiefpaßfiltern des Basisband-Audiosignals;
(R) Durchlassen des Signals, das eine Frequenzkomponente hat, die der Differenz (f - fs) der Trägerfrequenz und des Helligkeitssignals entspricht, vor dem Multiplex- und Übertragungsschritt (D);
(S) Tiefpaßfiltern des frequenz-demodulierten Helligkeitssignals vor dem Mischschritt (H); und
(T) Durchlassen des Signals, das eine Frequenzkomponente fs hat, vor dem Multiplexschritt (H).

9. Verfahren nach Anspruch 6, 7 oder 8, wobei dieses Verfahren weiterhin die folgenden Schritte umfaßt:
(U) Tiefpaßfiltern des Helligkeitssignals vor dem Voranhebungsschritt (I);
(V) Tiefpaßfiltern des Farbwertsignals (b) vor dem Konvertierungsschritt (C);
(W) Hochpaßfiltern des frequenzmodulierten Helligkeitssignals von Schritt (D) vor dem Entfernungsschritt (J);
(X) Tiefpaßfiltern des Basisband-Audiosignals;
(Y) Bandpaßfiltern des frequenzkonvertierten Farbwertsignals von Schritt (D) vor dem Konvertierungsschritt (G).

10. Verfahren für das Senden und Empfangen von Audio-Videosignalen im Multiplexbetrieb zwischen zwei Sender/Empfängergeräten an jeder einer ersten und einer zweiten Station über ein Paar parallele Drähte oder ein verdrilltes Paar Drähte (30) durch Multiplexen von Basisband-Audiosignalen und Videosignalen, wobei die Basisband-Audiosignale bidirektional sind, welches folgende Schritte umfaßt:
Auftrennen eines ursprünglichen Signals in ein Helligkeitssignal (a) und ein Farbwertsignal (b);
Voranheben des Helligkeitssignals (a) durch Anheben einer Frequenzkomponente davon;
Modulieren eines Niederfrequenzträgers mit dem abgetrennten Helligkeitssignal (c);
Konvertieren eines abgetrennten Farbwertsignals (b) auf eine Frequenz niedriger als dessen ursprüngliche Frequenz;
Multiplexen des ersten frequenzmodulierten Helligkeitssignals und des ersten frequenzkonvertierten Farbwertsignals mit Basisband-Audiosignalen an der ersten Station und Übertragen jedes in Multiplexbetrieb überführten Signals über ein Paar parallele Drähte oder ein verdrilltes Paar Drähte im Zweirichtungsbetrieb;
Auftrennen eines zweiten ursprünglichen Signals in ein zweites Helligkeitssignal (a) und ein zweites Farbwertsignal (b);
Voranheben des zweiten Helligkeitssignals (a) durch Anheben einer Hochfrequenzkomponente davon;
Modulieren des zweiten Heligkeitssignals mit einem zweiten niederfrequenten Träger, der von dem ersten niederfrequenten Träger verschieden ist;
Konvertieren des zweiten abgetrennten Farbwertsignals auf eine Frequenz niedriger als seine ursprüngliche Frequenz;
Multiplexen des zweiten frequenzmodulierten Helligkeitssignals und des zweiten frequenzkonvertierten Farbwertsignals mit Basisband-Audiosignalen an der zweiten Station und gleichzeitiges Übertragen jedes in Multiplexbetrieb gebrachten Signals über ein Paar parallele Drähte oder ein verdrilltes Paar Drähte im Zweirichtungsbetrieb, derart, daß solche Signale im Multiplexbetrieb an jeder ersten und zweiten Station beide bei verschiedenen Frequenzen arbeiten;
Auftrennen aller im Multiplexbetrieb übertragenen Signale in Audiosignale und frequenzmodulierte und frequenzkonvertierte Videosignale an jeder ersten beziehungsweise zweiten Station;
Entfernen einer Amplitudenkomponente von jedem frequenzmodulierten Videosignal an jeder ersten beziehungsweise zweiten Station;
Frequenzdemodulieren jedes frequenzmodulierten Videosignals an jeder ersten beziehungsweise zweiten Station und dadurch Gestatten einer Zweirichtungsübertragung der Audio- und Videosignale;
Unterdrücken der Hochfrequenzkomponente jedes ersten und zweiten Helligkeitssignals im Anschluß an das Demodulieren dieser Helligkeitssignale; und
Konvertieren der abgetrennten frequenzkonvertierten Videosignale auf ihre ursprüngliche Frequenz an jeder ersten beziehungsweise zweiten Station.

## Revendications

1. Appareil de transmission et de réception de signaux audio-vidéo multiplexés par une paire de fils parallèles ou une paire torsadée de fils (30) en multiplexant un signal audio en bande de base et un signal vidéo, l'appareil comprenant un émetteur incluant,
un premier moyen de séparation (11, 12) pour séparer un signal originel en un signal de luminance (a) et un signal de chrominance (b) ;
un premier moyen de modulation (14) pour moduler une porteuse à fréquence basse avec le signal de luminance séparé (c) ;
un premier moyen de transformation (17) pour transformer le signal de chrominance séparé (b) à une fréquence inférieure à sa fréquence originelle ;
un moyen de multiplexage (16) pour multiplexer les signaux audio en bande de base, le signal de luminance en fréquence modulée, et le signal de chrominance à fréquence transformée par une division de fréquence, et pour transmettre les signaux multiplexés ; et
un récepteur incluant,
un second moyen de séparation (41, 42, 43) connecté audit moyen de multiplexage (16) via lesdits fils (30), pour séparer les signaux transmis en un signal audio bilatéral (i), un signal de luminance modulé en fréquence (h), et un signal de chrominance à fréquence abaissée (j) ;
un moyen de démodulation (45) pour démoduler le signal de luminance à fréquence modulée ;
un second moyen de transformation (49) pour transformer le signal de chrominance à fréquence abaissée (j) à sa fréquence originelle ; et
un moyen de mélange (48) pour mélanger les signaux pour obtenir le signal vidéo originel,
l'émetteur comprenant de plus un moyen de pré-accentuation (13), connecté audit premier moyen de séparation, pour pré-accentuer le signal de luminance (a) avant de moduler ce dernier, en accentuant une composante à haute fréquence du signal de luminance ; et le récepteur comprenant de plus
un moyen de limitation (44), connecté audit second moyen de séparation, pour enlever une composante d'amplitude du signal de luminance modulé en fréquence ; et
un moyen de suppression (46), connecté audit moyen de démodulation, pour supprimer la composante à haute fréquence du signal de luminance démodulé, consécutive audit signal de luminance en train d'être démodulé.

2. Appareil selon la revendication 1, dans lequel ledit appareil comprend de plus un premier oscillateur local (18), connecté audit premier moyen de transformation (17) recevant un signal de chrominance (b) ayant une composante de fréquence de fs, pour produire une porteuse d'une fréquence f et un second oscillateur local (50), connecté audit second moyen de transformation, pour produire une porteuse d'une fréquence f, et dans lequel ledit premier moyen de transformation transforme le signal de chrominance de fréquence fs en un signal ayant des composantes de fréquence (e) qui correspondent à la somme (f + fs) et à la différence (f - fs) de ladite fréquence porteuse et dudit signal de chrominance, et ledit second moyen de transformation (49) transforme un signal de chrominance (j) en un signal (l) ayant des composantes de fréquence de fs et 2f - fs.

3. Appareil selon la revendication 1 ou 2, dans lequel l'appareil comprend de plus :
un premier moyen de filtre passe-haut (15), connecté audit premier moyen de modulation (14) pour filtrer avec un filtre passe-haut le signal de luminance à fréquence modulée ;
un second moyen de filtrage passe-bas (20), connecté audit moyen de multiplexage (16), pour filtrer avec un filtre passe-bas le signal audio en bande de base avant ledit moyen de multiplexage ;
un second moyen de filtrage passe-bande (19), connecté audit premier moyen de transformation (17), pour passer le signal ayant une composante de fréquence qui correspond à la différence (f - fs) de ladite fréquence porteuse et dudit signal de chrominance ;
un quatrième moyen de filtrage passe-bas (47), connecté audit moyen de suppression (46), pour filtrer avec un filtre passe-bas le signal de luminance démodulé en fréquence ; et
un quatrième moyen de filtrage passe-bande (51), connecté audit second moyen de transformation (49), pour passer le signal ayant une composante de fréquence de fs.

4. Appareil selon l'une quelconque des revendications précédentes, dans lequel ledit premier moyen de séparation comprend :
un premier moyen de filtrage passe-bas (11), connecté audit moyen de pré-accentuation (13) pour filtrer avec un filtre passe-bas le signal de luminance avant de pré-accentuer celui-ci ;
un premier moyen de filtrage passe-bande (12), connecté au premier moyen de transformation (17), pour filtrer avec un filtre passe-bande le signal de chrominance (b), et dans lequel ledit second moyen de séparation comprend :
un second moyen de filtrage passe-haut (41), connecté audit moyen de limitation (44), pour filtrer avec un filtre passe-haut le signal de luminance à fréquence modulée avant ledit moyen de limitation ;
un troisième moyen de filtrage passe-bas (42), connecté auxdits fils (30), pour filtrer avec un filtre passe-bas le signal audio en bande de base ;
un troisième moyen de filtrage passe-bande (43), connecté audit second moyen de transformation (49), pour filtrer avec un filtre passe-bande le signal de chrominance à fréquence transformée avant ledit second moyen de transformation.

5. Appareil de transmission et de réception de signaux audio-vidéo multiplexés entre deux jeux d'émetteurs/récepteurs, un jeu d'émetteur/récepteur à chacune d'une première et seconde station, par une paire de fils parallèles ou une paire torsadée de fils (30), en multiplexant des signaux audio en bande de base et des signaux vidéo, les signaux audio en bande de base étant bidirectionnels et comprenant
un premier moyen de séparation (11, 12) pour séparer un premier signal originel en un signal de luminance (a) et un premier signal de chrominance (b) ;
un premier moyen de pré-accentuation (13), connecté audit premier moyen de séparation, pour accentuer le premier signal de luminance (a) en pré-accentuant une composante à haute fréquence de ce dernier ;
un premier moyen de modulation (14) pour moduler une première porteuse à fréquence basse avec le premier signal de luminance séparé (c) ;
un premier moyen de transformation (17) pour transformer le signal de chrominance séparé (b) à une fréquence inférieure à sa fréquence originelle ;
un premier moyen de multiplexage (16) pour multiplexer ledit premier signal de luminance à fréquence modulée et le premier signal de chrominance à fréquence transformée avec des signaux audio en bande de base à ladite première station et pour transmettre simultanément chacun des signaux multiplexés par une paire de fils parallèles ou une paire torsadée de fils d'une manière bidirectionnelle ;
un second moyen de séparation pour séparer un second signal originel en un second signal de luminance (a) et en un second signal de chrominance (b) ;
un second moyen de pré-accentuation, connecté audit second moyen de séparation, pour pré-accentuer le second signal de luminance (a) en accentuant une composante à haute fréquence de ce dernier ;
un second moyen de modulation pour moduler le second signal de luminance avec une seconde porteuse à fréquence basse, différente de ladite première porteuse à fréquence basse ;
un second moyen de transformation pour transformer le second signal de chrominance séparé à une fréquence inférieure à sa fréquence originelle ;
un second moyen de multiplexage (48) pour multiplexer le second signal de luminance à fréquence modulée et le second signal de chrominance à fréquence transformée avec des signaux audio en bande de base à ladite seconde station et pour transmettre simultanément chacun des signaux multiplexés par la paire de fils parallèles ou la paire torsadée de fils d'une manière bidirectionnelle telle que lesdits signaux multiplexés à chacune desdites première et seconde stations fonctionnent ensemble à des fréquences différentes ;
un troisième (41, 42, 43) et un quatrième moyen de séparation pour séparer chacun des signaux multiplexés en signaux audio et signaux vidéo à fréquence modulée et à fréquence tranformée à respectivement chacune desdites première et seconde stations ;
un premier (44) et un second moyen de limitation, connectés respectivement auxdits premier et second moyens de séparation, pour enlever une composante d'amplitude de chacun des signaux vidéo séparés à fréquence modulée respectivement à chacune desdites première et seconde stations ;
un premier (45) et un second moyen de démodulation de fréquence, connectés respectivement auxdits premier et second moyens de limitation, pour démoduler en fréquence chacun des signaux vidéo à fréquence modulée à respectivement chacune desdites première et seconde stations, autorisant par ce moyen la transmission bidirectionnelle des signaux vidéo et audio ;
un premier (46) et un second moyen de suppression connectés respectivement auxdits premier et second moyens de démodulation pour supprimer la composante à haute fréquence du signal de luminance démodulé, consécutive audit signal de luminance en train d'être démodulé ; et
un premier (49) et un second moyen de transformation connectés respectivement auxdits premier et second moyens de séparation, pour transformer les signaux vidéo séparés à fréquence transformée à leur fréquence originelle à respectivement chacune desdites première et seconde stations.

6. Procédé pour transmettre et recevoir des signaux audio-vidéo multiplexés par une paire de fils parallèles ou une paire torsadée de fils (30) en multiplexant un signal audio en bande de base et un signal vidéo, le procédé comprenant les étapes de :
d'un côté émetteur,
(A) séparation d'un signal originel en un signal de luminance (a) et un signal de chrominance (b) ;
(B) modulation d'une porteuse à basse fréquence avec le signal de luminance séparé (c) de l'étape (A) ;
(c) transformation du signal de chrominance séparé (b) de l'étape (A) à une fréquence inférieure à une fréquence originelle du signal de chrominance ;
(D) multiplexage des signaux audio en bande de base, du signal de luminance à fréquence modulée de l'étape (B), et du signal de chrominance à fréquence transformée de l'étape (C) par une division de fréquence, et transmission des signaux multiplexés ; et
d'un côté récepteur
(E) séparation des signaux transmis de l'étape (D) en un signal audio bilatéral (i), un signal de luminance à fréquence modulée (h), et un signal de chrominance à fréquence abaissée (j) ;
(F) démodulation du signal de luminance à fréquence modulée de l'étape (E) ;
(G) transformation du signal de chrominance à fréquence abaissée (j) de l'étape (E) à la fréquence originelle du signal de chrominance ; et
(H) mélange des signaux des étapes (F) et (G) pour obtenir le signal vidéo originel de l'étape (A), et du côté de l'émetteur, le procédé comprenant en outre les étapes de
(I) pré-accentuation du signal de luminance (a) de l'étape (A) avant l'étape de modulation (B), en accentuant une composante à haute fréquence du signal de luminance ; et du côté récepteur, le procédé comprenant en outre les étapes
(J) d'enlèvement d'une composante d'amplitude du signal de luminance à fréquence modulée de l'étape (E) avant l'étape de démodulation (F) ; et
(K) de suppression de la composante à haute fréquence du signal de luminance démodulé de l'étape (F) qui était accentué à l'étape (I), consécutive à l'étape (F).

7. Procédé selon la revendication 6, dans lequel ledit procédé comprend de plus les étapes de :
(L) production d'une porteuse d'une fréquence f du côté émetteur ;
(M) production d'une porteuse d'une fréquence f du côté récepteur ;
(N) réception d'un signal de chrominance de l'étape (A) ayant une composante de fréquence de fs et d'une porteuse de l'étape (L) et transformation du signal de chrominance de fréquence fs en un signal ayant des composantes de fréquence (e) qui correspondent à la somme (f + fs) et à la différence (f - fs) de ladite fréquence de porteuse et dudit signal de chrominance, et
(O) réception d'un signal de chrominance de l'étape (E) ayant une composante de fréquence fs et d'une porteuse de l'étape (M) et tranformation du signal de chrominance de fréquence f - fs en un signal ayant des composantes de fréquence de fs et 2f - fs.

8. Procédé selon la revendication 6 ou 7, dans lequel ladite méthode comprend de plus les étapes de :
(P) filtrage passe-haut du signal de luminance à fréquence modulée avant multiplexage et étape de transmission (D) ;
(Q) filtrage passe-bas du signal audio en bande de base ;
(R) passage du signal ayant une composante de fréquence qui correspond à la différence (f - fs) de ladite fréquence de porteuse et dudit signal de chrominance avant multiplexage et étape de transmission (D) ;
(S) filtrage passe-bas du signal de luminance à fréquence démodulée avant étape de mélange (H) ; et
(T) passage du signal ayant une composante de fréquence de fs avant étape de multiplexage (H).

9. Procédé selon la revendication 6, 7 ou 8, dans lequel ledit procédé comprend de plus les étapes de :
(U) filtrage passe-bas du signal de luminance avant étape de pré-accentuation (I) ;
(V) filtrage bande-basse du signal de chrominance (b) avant étape de transformation (C) ;
(W) filtrage passe-haut du signal de luminance à fréquence modulée de l'étape (D) avant étape d'enlèvement (J) ;
(X) filtrage passe-bas du signal audio en bande de base ;
(Y) filtrage passe-bande du signal de chrominance à fréquence transformée de l'étape (D) avant étape de transformation (G).

10. Procédé pour transmettre et recevoir des signaux audio-vidéo multiplexés entre deux jeux d'émetteurs/récepteurs, un jeu d'émetteur/récepteur à chacune d'une première et seconde station, par une paire de fils parallèles ou une paire torsadée de fils (30), en multiplexant des signaux audio en bande de base et des signaux vidéo, les signaux audio en bande de base étant bidirectionnels et comprenant les étapes de séparation d'un signal originel en un signal de luminance (a) et un signal de chrominance (b) ;
pré-accentuation du signal de luminance (a) en accentuant une composante à haute fréquence de celui-ci ;
modulation d'une porteuse à basse fréquence avec le signal de luminance séparé (c) ;
transformation d'un signal de chrominance séparé (b) à une fréquence inférieure à sa fréquence originelle ;
multiplexage dudit premier signal de luminance à fréquence modulée et du premier signal de chrominance à fréquence transformée avec des signaux audio en bande de base à ladite première station et transmission simultanée de chacun des signaux multiplexés par une paire de fils parallèles ou une paire torsadée de fils d'une manière bidirectionnelle ;
séparation d'un second signal originel en un second signal de luminance (a) et un second signal de chrominance (b) ;
pré-accentuation du second signal de luminance (a) en accentuant une composante à haute fréquence de celui-ci ;
modulation du second signal de luminance avec une seconde porteuse à basse fréquence, différente de ladite première porteuse à basse fréquence ;
transformation du second signal de chrominance séparé à une fréquence inférieure à sa fréquence originelle ;
multiplexage du second signal de luminance à fréquence modulée et du second signal de chrominance à fréquence transformée avec des signaux audio en bande de base à ladite seconde station et transmission simultanée de chacun des signaux multiplexés par la paire de fils parallèles ou la paire torsadée de fils d'une manière bidirectionnelle telle que lesdits signaux multiplexés à chacune desdites première et seconde stations fonctionnent ensemble à des fréquences différentes ;
séparation de chacun des signaux multiplexés en des signaux audio et des signaux vidéo à fréquence modulée et à fréquence transformée respectivement à chacune desdites première et seconde stations ;
enlèvement d'une composante d'amplitude de chacun des signaux vidéo séparés à fréquence modulée respectivement à chacune desdites première et seconde stations ;
démodulation de fréquence de chacun des signaux vidéo à fréquence modulée à respectivement chacune desdites première et seconde stations, autorisant par ce moyen la transmission bidirectionnelle des signaux vidéo et audio ;
suppression de la composante à haute fréquence de chacun des premier et second signaux de luminance démodulés, consécutive auxdits signaux de luminance en train d'être démodulés ; et
transformation des signaux vidéo séparés à fréquence transformée à leur fréquence originelle à respectivement chacune desdites première et seconde stations.
